Europäisches Patentamt

European Patent Office

Office européen des brevets

(11) Veröffentlichungsnummer: **0 322 077**
**A2**

## (12) EUROPÄISCHE PATENTANMELDUNG

(21) Anmeldenummer: 88202965.5

(22) Anmeldetag: **19.12.88**

(51) Int. Cl.⁴: **G01M 11/00**

(30) Priorität: **23.12.87 DE 3743678**

(43) Veröffentlichungstag der Anmeldung:
**28.06.89 Patentblatt 89/26**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT**

(72) Erfinder: **Brinkmeyer, Ernst, Prof. Dr.**
**Mittelstrasse 33**
**D-2110 Buchholz(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Optisches Rückstreumessgerät.**

(57) Die Erfindung betrifft ein optisches Rückstreumeßgerät mit einem optischen Sender, dessen Sendeleistung über einen Oszillator mit sich ändernder Frequenz moduliert (gewobbelt) und dessen Sendestrahl über einen Strahlteiler in einen Lichtwellenleiter (LWL) geleitet ist, und mit einem als Photodiode ausgebildeten optischen Empfänger, welchem über den Strahlteiler aus dem LWL zurückgestreute Anteile des Sendestrahls zugeführt werden und in welchem ein Mischsignal aus einem der optischen Rückstreuleistung proportionalen Signal und einer die Oszillatorfrequenz aufweisenden Modulationsspannung gebildet und zur Ermittlung des Rückstreuorts und der Rückstreuintensität ausgewertet wird. Der Aufwand für den optischen Empfänger wird dadurch verringert, daß die Photodiode eine Avalanche-Photodiode (4) ist, deren Vorspannung eine mit der Modulationsspannung $(U_M)$ modulierte Gleichspannung $(U_G)$ ist, und daß das Mischsignal $(U_f)$ an einer in den Erregerstromkreis der Photodiode (4) geschalteten Parallelschaltung aus einem ohmschen Widerstand $R_p$ und einem Kondensator $C_p$ abgegriffen ist.

FIG.1

## Optisches Rückstreumeßgerät

Die Erfindung bezieht sich auf ein optisches Rückstreumeßgerät mit einem optischen Sender, dessen Sendeleistung über einen Oszillator mit sich ändernder Frequenz moduliert (gewobbelt) und dessen Sendestrahl über einen Strahlteiler in einen Lichtwellenleiter (LWL) geleitet ist, und mit einem als Photodiode ausgebildeten optischen Empfänger, welchem über den Strahlteiler aus dem LWL zurückgestreute Anteile des Sendestrahls zugeführt werden und in welchem ein Mischsignal aus einem der optischen Rückstreuleistung proportionalen Signal und einer die Oszillatorfrequenz aufweisenden Modulationsspannung gebildet und zur Ermittlung des Rückstreuorts und der Rückstreuintensität ausgewertet wird.

Bei einer durch die DE-OS 30 08 187 bekannten derartigen Anordnung werden das elektrische Ausgangssignal der Photodiode und das Signal des Oszillators gemeinsam einem Mischer zur Bildung des Mischsignals zugeführt. Da hohe Modulationsfrequenzen erforderlich sind, benötigt man eine sehr "schnelle" und deshalb aufwendige Detektorschaltung.

Der Erfindung liegt die Aufgabe zugrunde, den Aufwand für den optischen Empfänger zu verringern.

Die Lösung gelingt dadurch, daß die Photodiode eine Avalanche-Photodiode ist, deren Vorspannung eine mit der Modulationsspannung modulierte Gleichspannung ist, und daß das Mischsignal an einer in den Erregerstromkreis der Photodiode geschalteten Parallelschaltung aus einem ohmschen Widerstand $R_P$ und einem Kondensator $C_P$ abgegriffen ist.

Für die erfindungsgemäße Anordnung ist kein zusätzlicher Mischer erforderlich, da auch die Mischung durch die Avalanche-Photodiode bewirkt wird, wobei das Mischsignal an einer vorgeschalteten Parallelschaltung aus einem ohmschen Widerstand und einem Kondensator abgegriffen wird.

Dabei ist es vorteilhaft, daß das Verhältnis der Mischfrequenz zur Modulationsfrequenz kleiner als 0,5 · $10^{-3}$ ist. Bei größeren Verhältnissen ist es schwieriger, das Mischsignal von der modulationsfrequenten Spannung zu trennen. Dabei ist vorzugsweise vorgesehen, daß der ohmsche Widerstand $R_P$ größer als das 10- fache, vorzugsweise größer als das 20- fache, des auf den Kleinstwert der Modulationsfrequenz bezogenen Scheinwiderstandes und kleiner als das 0,05- fache, vorzugsweise das 0,035-fache, des auf die Mischfrequenz bezogenen Scheinwiderstandes des Kondensators $C_P$ ist.

Eine gute Signalausbeute ergibt sich weiterhin dadurch, daß der sich beim Größtwert der Modulationsfrequenz ergebende Scheinwiderstand der Reihenschaltung des Kondensators $C_P$ und der Eigenkapazität $C_D$ der Photodiode größer als das 10- fache, vorzugsweise das 20- fache des ohmschen Innenwiderstandes $R_i$ der Erregerschaltung für die Photodiode ist.

Das von einem bestimmten Rückstreuort auf der Länge des untersuchten LWL zurückgestreute Licht kann dadurch gezielt erfaßt werden, daß das Mischsignal über ein Bandpaßfilter geleitet ist und daß Verschiebungsfrequenzen entsprechend dem zu betrachtenden Abstand der Rückstreustelle vorgegeben sind. Kleinere Meßzeiten ergeben sich jedoch dadurch, daß das Mischsignal parallel über mehrere Bandfilter unterschiedlicher Durchlaßfrequenz geleitet ist, so daß mehrere voneinander beabstandete Rückstreustellen gleichzeitig gemessen werden können.

Gemäß einer vorteilhaften Alternative ist es auch möglich, statt der Verwendung von Bandpaßfiltern vorzusehen, daß die Mischsignale einer Schaltung zur Fourier-Transformation zugeführt sind. Dadurch kann man die Meßzeit auf ein Minimum verkürzen.

Die Erfindung und deren Vorteile werden anhand der Beschreibung eines in der Zeichnung dargestellten vorteilhaften Ausführungsbeispiels näher erläutert.

Figur 1 zeigt ein Blockdiagramm eines Rückstreumeßgeräts gemäß der Erfindung

Figur 2 zeigt die erfindungsgemäße elektrische Erregerschaltung der Photodiode nach Figur 1.

Der Sendestrahl der Laserdiode 1 wird über den Strahlteiler 2 in den zu vermessenden LWL 3 geleitet. Aus dem LWL 3 zurückgestreute Anteile des Sendestrahls werden vom Strahlteiler 2 auf die Empfängerdiode (APD) 4 gerichtet. Das frequenzveränderliche Signal des Oszillators 5 wobbelt einerseits die Lichtintensität der Laserdiode 1 und wird andererseits zur Bildung eines Mischsignals in der Empfangs- und Auswerteeinrichtung 6 verwendet.

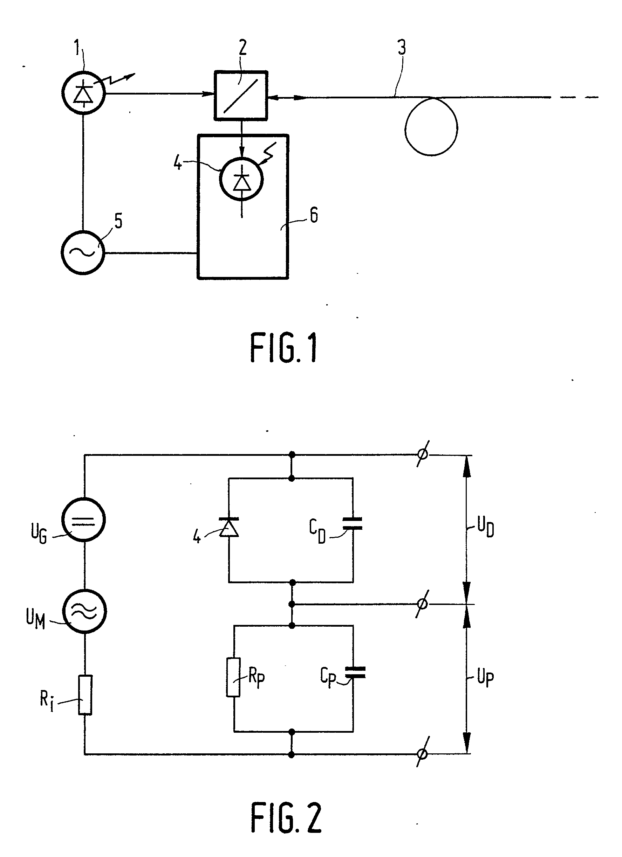

Gemäß Figur 2 ist in Reihe zur APD 4, welche eine Eigenkapazität $C_D$ hat, eine Parallelschaltung aus einem ohmschen Widerstand $R_P$ und einem Kondensator $C_P$ geschaltet. An die Reihenschaltung ist die Summenspannung aus der Gleichspannung $U_G$ und der dem Signal des Oszillators 5 proportionalen Modulationsspannung $U_M$ gelegt. Der Innenwiderstand der beiden Spannungsquellen ist mit $R_i$ bezeichnet.

Die Laserdiode 1 wird moduliert und in einer Zeit T mittels des Oszillators 5 von der Frequenz $f_0$ bis $f_{max}$ durchgewobbelt. Die Leistung des Sendestrahls ändert sich dann nach folgender Gleichung:

$$P(t) \doteq \hat{P}[1 + m_L \cos(\Omega_c t + \frac{\gamma}{2} t^2)]$$

Von einer beliebigen Störquelle des LWL 3 im Abstand z (oder von einem rückstreuenden Längenelement) gelangt diese Leistung $P_s(t)$ um die Zeit $\tau = 2z/v_g$ zeitverzögert und intensitätsmäßig abgeschwächt auf die APD 4:

$$P_s(t) = r\, P(t - \tau) = r \cdot \hat{P}[1 + m_L \cos(\Omega_0(t-\tau) + \frac{\gamma}{2} t^2 - \gamma\tau t + \frac{\gamma}{2} \tau^2)]$$

Durch Mischung von Signalen mit den Frequenzen des Eingangssignals der APD und des momentanen Ansteuersignals für die Laserdiode entsteht ein Mischterm mit der Frequenz $\delta\tau/2\pi$. Seine Amplitude ist zur reflektierten Leistung proportional, seine Frequenz ist ein Maß für den Reflexionsort.

Erfindungsgemäß wird nach Figur 2 die Vorspannung der APD durch ein von der Laserdiodenansteuerung abgeleitetes Signal hochfrequent moduliert.

Die APD wird also gleichzeitig zum Empfang und zum Mischen benutzt.

Die Bauelemente der Schaltung nach Figur 2 wurden unter Beachtung folgender Anforderungen bemessen:

- im Bereich der Modulationsfrequenzen $[f_o, f_{max}]$ soll der Widerstand $R \gg 1/\omega C$ sein.
- im Bereich $[f_o, f_{max}]$ soll $|U_D/U_M| \geq 0{,}7$ sein
- im Bereich $[f_o, f_{max}]$ soll $\omega R_i (1/C_p + 1/C_D)^{-1} < 0{,}1$ sein
- im Bereich der Mischfrequenz $\Delta_f$ des Mischsignals $U_P$ soll $R_P \ll 1/\omega C$ sein.

Diese Forderungen wurden durch folgende Werte erfüllt:

$C_D = 0{,}5$ pF, $C_p = 1{,}5$ pF, $R_i = 50\,\Omega$, $R_p = 300$ k$\Omega$
mit
$f_o = 10$ MHz; $f_{max} = 500$ MHz;
Mit diesen Werten ergibt sich:
- $R_P/(1/\omega C) > 28$ im Bereich $[f_o, f_{max}]$
- $|U_D/U_M| = 0{,}75$ im Bereich $[f_o, f_{max}]$
- $\omega R_i(1/C_P + 1/C_D)^{-1} < 0{,}06$ im Bereich $[f_o, f_{max}]$
- $R_P/(1/\omega C) < 0{,}028$ für $\Delta f = 10$ kHz

Durch diese Bemessung ist gewährleistet, daß die Modulationsspannung niederohmig an der APD anliegt, während für die Signale mit der Mischfrequenz $\Delta f$ der Widerstand $R_p$ als Konversionswiderstand auftritt und groß gewählt werden kann.

Wenn die Ansteuerspannung der Laserdiode mittels des Oszillators 5 definiert um kleine Frequenzen $\Delta\Omega$ frequenzverschoben wird, erhält man in erster Näherung für die Avalanche-Verstärkung M der APD 4:

$$M(t) = M_c[1 + m_A \cos((\Omega_c + \Delta\Omega)\, t + \frac{\gamma}{2} t^2)]$$

Bei der Empfangsleistung $P_s(t)$ ergibt sich der Photostrom $i_{ph}(t)$ zu :

$$i_{ph}(t) = S \cdot M(t) \cdot P_s(t)$$
$$= S \cdot R\hat{P}M_o\{\tfrac{1}{2} m_A \cdot m_2 \cos[(\gamma\tau + \Delta\Omega)\, t + \Omega_c\tau - \frac{\gamma}{2} \tau^2] + 1\}$$
$$+ \text{hochfrequente Terme}$$

Wird mit einem Filter eine feste Frequenz $\Omega_D$ detektiert, so kann durch Wahl der Frequenzverschiebungein $\Delta\Omega$ ein im Abstand z (entsprechend einer Zeitverzögerung $\tau$) befindliches zugeordnetes Längenelement betrachtet werden:

$\Omega_D = \gamma\tau + \Delta\Omega$
bzw. $\tau = (\Omega_D - \Delta\Omega)/\gamma$

Wenn man die Bandbreite $\Delta\Omega_D$ des Filters so wählt, daß

$$\Delta\Omega_D = \frac{f_{max} - f_o}{\gamma}$$

ist,

ergibt sich eine Auflösung $\Delta\tau$:

$$\Delta\tau = \frac{1}{f_{max} - f_o}$$

Die Ortsauflösung ist demnach

$$\Delta z = v_g \Delta\tau/2 = \frac{v_g}{2(f_{max} - f_o)} ,$$

wenn $v_g$ die Lichtgeschwindigkeit im LWL ist.

Die Ortsauflösung ist also durch den insgesamt durchlaufenden Frequenzbereich bestimmt. Für obiges Beispiel mit $(f_{max}-f_o)$ ungefähr 500 MHz ergibt sich $\Delta z$ = 20 cm.

Bei einer Streckenlänge von 1 km und bei der Auflösung $\Delta z$ = 20 cm sind N = 5000 Meßpunkte zu erfassen. Um eine annehmbare Gesamtmeßzeit $N \cdot T$ zu erhalten, sollte eine Teit T von ungefähr 1 s gewählt werden.

Zur Reduzierung der Meßzeit ist es möglich, verschiedene Frequenzen gleichzeitig mit mehreren Filtern auszuwerten. Bei der Verwendung von 10 Filtern ist dann eine Reduktion der Meßzeit um den Faktor 10 erreichbar.

Anstelle der beschriebenen Auswertung über feste Detektionsfilter und Frequenzverschiebungen kann auch das Mischsignal gesampelt werden, und zwar für das gewählte Beispiel nach Figur 2 mit 10 kHz. Nach der Meßzeit T werden die Abtastwerte einer schnellen Fouriertransformation unterworfen. Dadurch ist eine sehr kurze Gesamtmeßzeit erreichbar.

## Ansprüche

1. Optisches Rückstreumeßgerät mit einem optischen Sender, dessen Sendeleistung über einen Oszillator mit sich ändernder Frequenz moduliert (gewobbelt) und dessen Sendestrahl über einen Strahlteiler in einen Lichtwellenleiter (LWL) geleitet ist, und mit einem als Photodiode ausgebildeten optischen Empfänger, welchem über den Strahlteiler aus dem LWL zurückgestreute Anteile des Sendestrahls zugeführt werden und in welchem ein Mischsignal aus einem der optischen Rückstreuleistung proportionalen Signal und einer die Oszillatorfrequenz aufweisenden Modulationsspannung gebildet und zur Ermittlung des Rückstreuorts und der Rückstreuintensität ausgewertet wird, dadurch gekennzeichnet, daß die Photodiode eine Avalanche-Photodiode (4) ist, deren Vorspannung eine mit der Modulationsspannung ($U_M$) modulierte Gleichspannung ($U_G$) ist, und daß das Mischsignal ($U_p$) an einer in den Erregerstromkreis der Photodiode (4) geschalteten Parallelschaltung aus einem ohmschen Widerstand $R_P$ und einem Kondensator $C_P$ abgegriffen ist.

2. Anordnung nach Anspruch 1, dadurch gekennzeichnet, daß das Verhältnis der Mischfrequenz $\Delta f$ zur Modulationsfrequenz $f_M$ kleiner als $0.5 \cdot 10^{-3}$ ist.

3. Anordnung nach Anspruch 1 oder 2, dadurch gekennzeichnet, daß der ohmsche Widerstand $R_P$ größer als das 10 fache, vorzugsweise größer als das 20 fache, des auf den Kleinstwert $f_o$ der Modulationsfrequenz bezogenen Scheinwiderstandes und kleiner als das 0.05 fache, vorzugsweise das 0,035 fache, des auf die Mischfrequenz $\Delta f$ bezogenen Scheinwiderstandes des Kondensators $C_P$ ist.

4. Anordnung nach einem der Ansprüche 1 bis 3,
dadurch gekennzeichnet, daß der sich beim Größtwert $f_{max}$ der Modulationsfrequenz ergebende Scheinwiderstand der Reihenschaltung des Kondensators ($C_P$) und der Eigenkapazität ($C_D$) der Photodiode größer als das 10- fache, vorzugsweise als das 20- fache, des ohmschen Innenwiderstandes $R_i$ der Erregerschaltung für die Photodiode (4) ist.

5. Anordnung nach einem der Ansprüche 1 bis 4,
dadurch gekennzeichnet, daß Ansteuerspannung der Laserdiode (1) um kleine Beträge gegenüber der Spannung $U_M$ frequenzverschiebbar ist.

6. Anordnung nach Anspruch 5,
dadurch gekennzeichnet, daß das Mischsignal ($U_P$) über ein Bandpaßfilter geleitet ist.

7. Anordnung nach Anspruch 5,
dadurch gekennzeichnet, daß das Mischsignal ($U_P$) parallel über mehrere Bandpaßfilter unterschiedlicher Durchlaßfrequenz geleitet ist.

8. Anordnung nach einem der Ansprüche 1 bis 4,
dadurch gekennzeichnet, daß die Mischsignale ($U_P$) einer Schaltung zur Fourier-Transformation zugeführt sind.

FIG.1

FIG.2